Europäisches Patentamt

European Patent Office

Office européen des brevets

(19)

(11) Numéro de publication: **0 021 890**

**A1**

(12)

# DEMANDE DE BREVET EUROPEEN

(21) Numéro de dépôt: **80400755.7**

(22) Date de dépôt: **29.05.80**

(51) Int. Cl.³: **B 60 Q 1/10**

(30) Priorité: **07.06.79 FR 7914520**

(43) Date de publication de la demande:
**07.01.81 Bulletin 81/1**

(84) Etats Contractants Désignés:
**DE GB IT SE**

(71) Demandeur: **DUCELLIER & Cie**
**Echat 950**
**F-94024 Creteil Cedex(FR)**

(72) Inventeur: **Aeschlimann, Michel**
**6, Place Salvator Allendé Les Philippines T2**
**F-94000 Creteil(FR)**

(74) Mandataire: **Habert, Roger**
**2, rue Boulle Echat 950**
**F-94024 Creteil Cedex(FR)**

(54) Dispositif de réglage automatique de projecteurs.

(57) Ce dispositif est plus particulièrement destiné à assurer le réglage automatique de la distance d'éclairage de projecteurs notamment pour véhicules automobiles à l'aide de deux senseurs (6) qui émettent des ultrasons, fournis par un élément (4), vers la bande de roulement et reçoivent les ondes réfléchies par cette bande de roulement, un élément (7) intégre en une tension U2 le déphasage existant entre les signaux de retour reçus par les senseurs (6), cette tension U2 est ensuite comparée, à l'aide d'un élément (8), à une tension U1 fonction de la position des projecteurs 1, le signal U3 issu de cet élément 8 commande alors un élément (9), lui même définissant le sens de rotation d'un moteur (2) qui agit sur les projecteurs (1).

_FIG. 1_

EP 0 021 890 A1

# DISPOSITIF DE REGLAGE AUTOMATIQUE DE PROJECTEURS

L'invention concerne un dispositif de réglage de la distance d'éclairage de projecteurs de véhicules automobiles, de façon à ce que cette distance d'éclairage reste sensiblement constante quelle que soit la position de la carrosserie, ou assiette, du véhicule par rapport au chemin de roulement.

Le dispositif est du type constitué d'un élément, par exemple un potentiomètre, qui délivre une tension fonction de la position du projecteur, laquelle tension est alors comparée à une autre tension significative de la position de l'assiette, élaborée à l'aide d'un dispositif comportant notamment deux capteurs, ou transducteurs, disposés vers les extrémités avant et arrière de la carrosserie.

Dans de tels dispositifs connus, les capteurs sont situés au niveau des essieux avant et arrière du véhicule, de ce fait la position de l'assiette du véhicule est déterminée par référence à un organe du véhicule, et principalement à un organe de suspension, or ceci amène de nombreux écarts de réglage suivant le type de véhicule équipé d'un tel dispositif ainsi que suivant le bon état de la suspension dudit véhicule.

La présente invention a pour but de remédier à de tels inconvénients et concerne à cet effet un dispositif de réglage automatique de la distance d'éclairage de projecteurs notamment pour véhicules automobiles, de façon à ce que cette distance d'éclairage reste sensiblement constante quelle que soit la position de la carrosserie, ou assiette, du véhicule par rapport au chemin de roulement, dispositif du type constitué d'un élément qui délivre une tension U1 fonction de la position du projecteur, laquelle tension est alors comparée à une autre tension U2, significative de la position de l'assiette, élaborée à l'aide d'un dispositif comportant notamment deux capteurs, ou transducteurs, disposés vers les extrémités avant et arrière de la carrosserie et d'un comparateur qui compare lesdites tensions U1 et U2 et transmet leur différence algébrique U3 à un organe de commande d'un système électro-mécanique de commande de l'inclinaison des projecteurs, dispositif de réglage caractérisé en ce que le dispositif comportant deux capteurs est constitué de sonars qui émettent simultanément des signaux sonores vers le chemin de roulement et en reçoivent l'onde réfléchie, et un élément qui intègre en la tension U2 le déphasage qui apparait entre le début du signal réfléchi capté par un des sonars et le début du signal réfléchi capté par l'autre sonar de manière à définir de façon effective la variation des distances entre l'avant et l'arrière du véhicule par rapport au chemin de roulement.

La description qui va suivre en regard des schémas annexés fera mieux comprendre comment l'invention peut être réalisée.

La figure 1 représente schématiquement un dispositif suivant l'invention.

La figure 2 représente schématiquement les étapes pour l'élaboration de la tension définissant la position de l'assiette du véhicule.

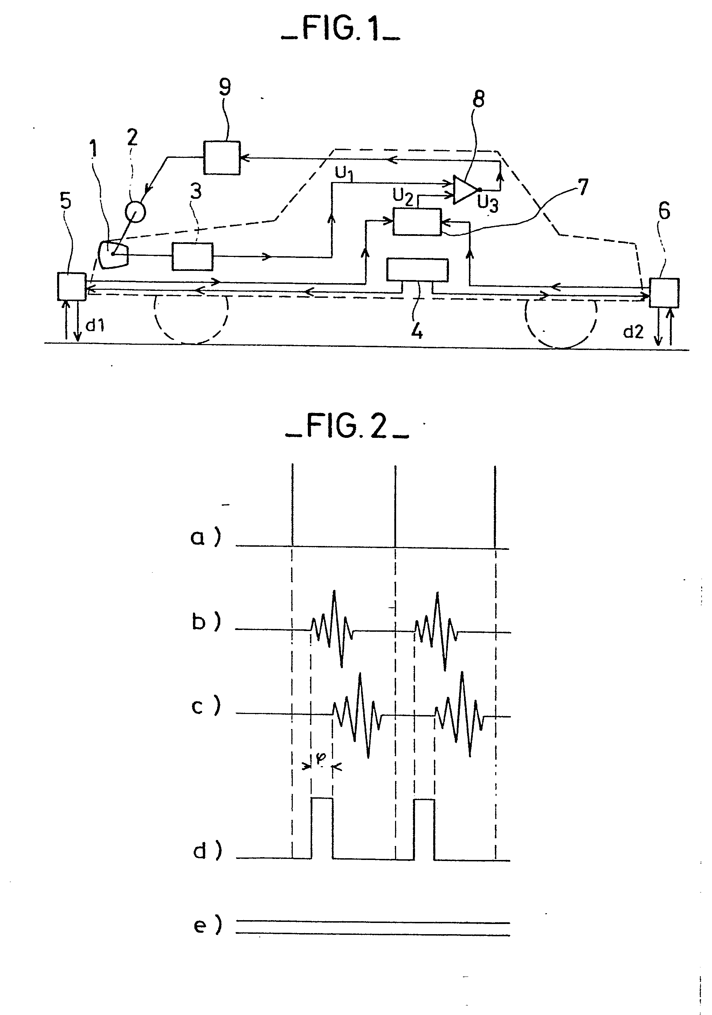

De façon connue, selon la figure 1, le dispositif de correction de la distance d'éclairage est constitué d'un élément 3, pouvant être un potentiomètre, qui délivre une tension U1 fonction du positionnement d'au moins un projecteur 1, d'un dispositif (4-5-6-7) qui délivre une tension U2 fonction de la position de l'assiette du véhicule par rapport à la bande de roulement, d'un comparateur 8 qui compare les tensions U1 et U2 et transmet leur différence algébrique U3 à un organe 9 de commande d'un système de commande électro mécanique de l'inclinaison du projecteur 1, ce système de commande électro mécanique peut par exemple être un moteur 2 dont un élément coopère avec un élément du projecteur 1 pour réaliser l'élément 3.

Conformément à l'invention le dispositif qui délivre la tension U2 fonction de la position de l'assiette du véhicule par rapport à la bande de roulement est un dispositif à ultrasons ou sonar.

Ce dispositif est constitué d'un générateur d'ultrasons, lesquels ultrasons sont dirigés vers la bande de roulement à l'aide d'un senseur 5 disposé à l'avant du véhicule, et d'un senseur 6 disposé à l'arrière dudit véhicule, ces dits senseurs 5 et 6 captent les signaux réfléchis sur la bande de roulement et les transmettent à un dispositif 7 de traitement de ces signaux.

Le fonctionnement de ce dispositif fonctionne alors de la façon suivante :

Le générateur d'ultrasons 4 crée les ultrasons lesquels sont régulièrement transmis sous l'aspect de tops équidistants (fig. 2a) vers le chemin de roulement à l'aide des sonars 5 et 6, ces sonars 5 et 6 captent alors l'écho dû à la réflexion de l'onde d'ultrasons envoyée sur le chemin de roulement, et envoient ledit écho vers le dispositif 7 de traitement des signaux réfléchis.

En supposant que l'avant de la voiture soit plus près du chemin de roulement que l'arrière, les signaux réfléchis sont alors représentés par la figure 2b pour l'avant et 2c pour l'arrière ; le dispositif 7 transforme en tension (fig. 2d) le déphasage $\varphi$ séparant le début des deux signaux 2b et 2c, puis l'intégre en une valeur moyenne (fig. 2e) correspondant à la tension U2 représentative de l'écart entre les distances d1 et d2 existantes entre les deux extrémités du véhicule par rapport au chemin de roulement.

REVENDICATION

1 - Dispositif de réglage automatique de la distance d'éclairage de projecteurs notamment pour véhicules automobiles, de façon à ce que cette distance d'éclairage reste sensiblement constante quelle que soit la position de la carrosserie, ou assiette, du véhicule par rapport au chemin de roulement, dispositif du type constitué d'un élément (3) qui délivre une tension U1, fonction de la position du projecteur (1), laquelle tension est alors comparée à une autre tension U2 significative de la position de l'assiette, élaborée à l'aide d'un dispositif (4) comportant notamment deux capteurs, ou transducteurs disposés vers les extrémités avant et arrière de la carrosserie et d'un comparateur (8) qui compare lesdites tensions U1 et U2 et transmet leur différence algébrique U3 à un organe de commande (9) d'un système électro.mécanique (2) de commande de l'inclinaison des projecteurs, dispositif de réglage caractérisé en ce que le dispositif (4) comportant deux capteurs est constitué de sonars (5-6) qui émettent simultanément des signaux sonores vers le chemin de roulement et en reçoivent l'onde réfléchie et d'un élément (7) qui intègre en la tension U2 le déphasage qui apparait entre le début du signal réfléchi capté par un des sonars et le début du signal réfléchi capté par l'autre sonar de manière à définir de façon effective la variation des distances entre l'avant et l'arrière du véhicule par rapport au chemin de roulement.

_FIG.1_

_FIG.2_

0021890

Numéro de la demande

Office européen
des brevets

**RAPPORT DE RECHERCHE EUROPEENNE**

EP 80 40 0755

| | **DOCUMENTS CONSIDERES COMME PERTINENTS** | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| X | <u>DE - A - 2 333 983</u> (BOSCH)<br>   * Page 3, ligne 7 - page 4 et<br>   figures 1,2 *<br><br>   ---- | 1 | B 60 Q 1/10 |
| | | | **DOMAINES TECHNIQUES RECHERCHES (Int. Cl. ³)** |
| | | | B 60 Q 1/06<br>        1/08<br>        1/10<br><br>  — |
| | | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base<br>   de l'invention<br>E: demande faisant interférence<br>D: document cité dans<br>   la demande<br>L: document cité pour d'autres<br>   raisons |
| | Le présent rapport de recherche a été établi pour toutes les revendications | | &: membre de la même famille,<br>document correspondant |
| Lieu de la recherche<br>La Haye | Date d'achèvement de la recherche<br>18-07-1980 | Examinateur<br>ONILLON | |

OEB Form 1503.1   06.78